# EUROPÄISCHE PATENTSCHRIFT

(11) **EP 0 560 715 B1**
(45) Veröffentlichungstag und Bekanntmachung des Hinweises auf die Patenterteilung: **18.06.1997**
(21) Anmeldenummer: 93810145.8
(22) Anmeldetag: 01.03.1993
(51) Int. Cl.: F27B 1/04, C04B 2/12

(54) **Schachtofen zum Brennen von stückigem, mineralischen Füllgut**
Shaft furnace for burning of lumpy mineral material
Four à cuve pour la cuisson de matière minérale en vrac

(30) Priorität: 07.03.1992 CH 712/92
(43) Veröffentlichungstag der Anmeldung: 15.09.1993
(73) Patentinhaber: Maerz Ofenbau AG, CH-8002 Zürich (CH)
(72) Erfinder: Scheibenreif, Karl, CH-8302 Kloten (CH); Pacak, Jiri, CH-8135 Langnau am Albis (CH)
(74) Vertreter: Quehl, Horst Max, Dipl.-Ing.

(56) Entgegenhaltungen:
- EP-A- 0 400 309
- CH-A- 647 313
- DE-A- 1 558 609
- DE-A- 2 600 254
- GB-A- 863 956

## Beschreibung

Die Erfindung betrifft einen Schachtofen mit den Merkmalen des Oberbegriffs des Anspruchs 1.

Ein Schachtofen dieser Art ist bekannt durch die CH-A-647 313 und dort in Fig.1 schematisch dargestellt.

Der kreisrunde Querschnitt der Ofenschächte ist für eine ausreichend gleichmässige Wärmeverteilung über den Schachtquerschnitt erforderlich, wenn der Ofen für grössere Durchsatzleistungen geeignet sein soll, wie sie mit rechteckförmigem Schachtquerschnitt nicht erzielbar sind. Der gemeinsame, umschliessende Kanal dient einer guten Wärmeverteilung, indem er eine gleichmässige Ableitung der Verbrennungsgase aus der Brennzone des einen Schachtes und eine gleichmässige Zuleitung derselben zum benachbarten Schacht ermöglicht. Er macht es jedoch erforderlich, den Durchmesser des Schachtraumes im oberen Bereich der Kühlzone gegenüber dem Durchmesser des darüber angeordneten Teils des Schachtraumes der Kühlzone zu vergrössern. Dadurch ergibt sich in Richtung zur Bodenöffnung des Schachtes eine für untere Schachtauslässe, Siloauslässe u.dgl. übliche verstärkte kegelförmige Verjüngung.

Der Beschreibung der genannten CH-A-647 313 desselben Anmelders ist weiterhin zu entnehmen, dass die Querschnittsverengung der Kühlzone in Richtung zum Austragsbereich auch bei zylindrischer Schachtaussenwand allein durch einen zentralen, im jeweiligen Schacht angeordneten Verdrängungskörper erzielt werden kann, so dass ein die Qualität des gebrannten Produktes verschlechternder Eintritt von CO₂-haltigen Rauchgasen in den unteren Kühlbereich angeblich verhindert wird und sich die aufsteigende Kühlluft ohne Kanalbildung innerhalb des körnigen Produkts, gleichmässig über den Schachtquerschnitt nach oben verteilt.

Für eine gleichmässige Wärmeverteilung und zur Verhinderung eines Zuwachsens im Bereich der Kanäle wurde es für erforderlich angesehen, die Stückgrösse des zu brennenden Steinmaterials nach unten zu begrenzen, so dass die für die Erzielung einer zufriedenstellenden Qualität des gebrannten Produktes empfohlene Stückgrössenverteilung im Bereich von 30 bis 150 mm liegt. Das Material mit kleiner Korngrösse von weniger als 30 mm musste abgetrennt und auf andere Weise, z.B. in aufwendigeren und mit niedrigem thermischen Wirkungsgrad arbeitenden Drehöfen verarbeitet werden.

Durch die DE-A-1 252 850 wurde zwar bereits ein Schachtofen vorgeschlagen, der dazu geeignet sein soll, auch ein Material mit einer minimalen Korngrösse von 10 mm zu brennen, jedoch mussten konstruktive Nachteile in Kauf genommen werden, die eine Realisierung eines solchen Ofens verhinderten.

Durch die DE-A-1 588 609 ist ein Kühlschacht für einen Drehofen bekannt, der auf einer Seite durch eine vertikale Schachtwand und auf der gegenüberliegenden Seite durch eine schräge Schachtwand begrenzt ist, so dass eine Einlaufrutsche gebildet ist und sich der Schacht zu einem durch eine Reihe von Brechwalzen gebildeten Rost hin erweitert. Ausserdem wird durch die folglich nach oben gerichtete Verengung eine Zunahme der Strömungsgeschwindigkeit angestrebt, so dass die kleineren körnigen Produktteile im Fliesszustand gehalten werden. Unterhalb des Brechrostes wird das Produkt im freien Fall in Kontakt mit der Kühlluft gekühlt.

Durch Fig.3 der GB-A-863 956 ist ein Schmelzofen bekannt, bei dem die Brennstoffzufuhr durch einen Ringkanal erfolgt, der an einer einen Absatz bildenden Erweiterung der vertikalen Schachtwände angeordnet ist. Die Ueberströmung der Brenngase zu einem benachbarten Schacht erfolgt innerhalb einer den unteren Abschluss bildenden Schmelzwanne, da diese die Verbindung zwischen beiden Schächten des Schmelzofens herstellt. Der Austrag des flüssigen Produktes erfolgt durch einen seitlich angeordneten Stutzen. Eine Kühlzone und eine Austragsvorrichtung für körniges Produkt sind bei einem solchen Schmelzofen nicht anzutreffen.

Der Erfindung liegt die Aufgabe zugrunde, einen Ofen der eingangs genannten Art zu finden, der im Gegensatz zu vorbekannten Schachtöfen ohne Leistungsabfall und erhebliche Qualitätsverschlechterung des gebrannten Produktes auch für ein Füllgut mit einer wesentlich kleineren Stückgrösse, z.B. im Bereich von 10 bis 30 mm geeignet ist, so dass es nicht in Drehöfen verarbeitet werden muss.

Die Lösung der genannten Aufgabe erfolgt erfindungsgemäss aufgrund der Merkmale des kennzeichnendeen Teils des Patentanspruchs 1.

Die erfindungsgemässe Lösung erfordert zwar eine grössere Dimensionierung des unteren Ofenbereichs sowie der Austragsvorrichtung, jedoch wird dieser Mehraufwand aufgrund der verhältnismässig grossen Durchsatzleistung solcher Schachtöfen und ihres verhältnismässig geringen Energieverbrauchs schnell amortisiert.

Durch die nur geringe, absatzfreie Neigung oder fehlende Neigung der Schachtwand in der Kühlzone bis zur Austrittskante der Bodenöffnung wird verhindert, dass körniges Material an der Schachtwand anwachsen und den Strömungsweg des Verbrennungsgases verengen kann. Der bei Schachtöfen der genannten, vorbekannten Art durch Zuwachsen des Strömungsweges auftretende erhebliche Leistungsabfall des Ofenwirkungsgrades, der bis zum Ausfall des Schachtofens führen kann, wird auf diese Weise vermieden.

Aufgrund des grösseren Bereichs der Korngrössenverteilung im Ofen empfiehlt es sich, feineres und groberes Stückmaterial dem Ofen in radial verschiedenen Bereichen zuzuführen. Hierfür eignet sich beispielsweise eine Beschickungsvorrichtung, wie sie durch die CH-A-678 847 bekannt ist.

Für eine bessere Verteilung der Wärmezufuhr und somit für eine gleichmässige Produktqualität empfiehlt es sich weiterhin, bei der Zufuhr eines flüssigen oder gasförmigen Brennstoffs eine engere Anordnung bzw. eine grössere Anzahl von Lanzen vorzusehen.

Im folgenden wird die Erfindung anhand eines schematisch dargestellten Ausführungsbeispieles erläutert. Es zeigt:
- Fig.1: eine schematische Schnittdarstellung eines vorbekannten Ofens und
- Fig.2: eine vereinfachte, teilweise geschnittene Darstellung eines erfindungsgemässen Ofens.

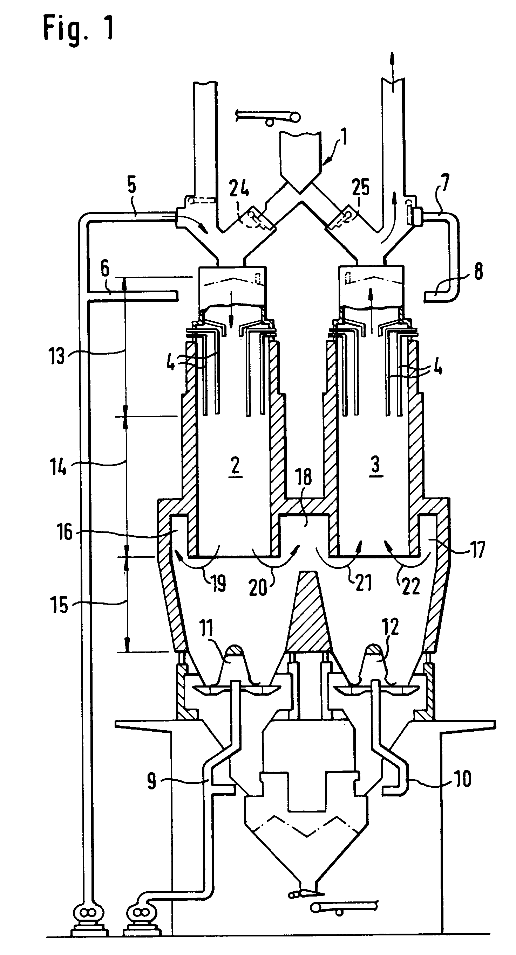

Die Darstellung der Fig.1 zeigt einen Gleichstrom-Regenerativ-Kalkofen entsprechend einem Prospekt der Anmelderin. Solche Oefen wurden in grösserer Anzahl gebaut und sind dem Fachmann als MAERZ-Oefen bekannt.

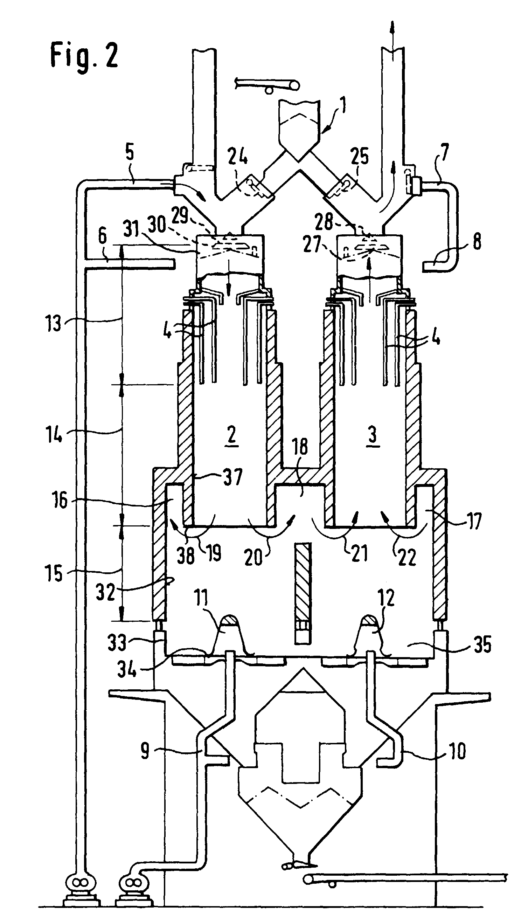

Wie auch beim erfindungsgemässen Ofen nach Fig.2 wird das über die Beschickungseinrichtung 1 abwechselnd den Schächten 2 und 3 zugeführte Füllgut in beiden Schächten 2,3 gleichzeitig gebrannt. In Intervallen von 12 bis 15 Minuten wird aber nur ein Schacht beheizt, indem die Brennstoffzufuhr über die Lanzen 4 und die Zuleitung von Verbrennungsluft über die Rohre 5-8 entsprechend periodisch nur zu einem Schacht 2 oder 3 erfolgt. Von unten wird den Schächten 2,3 über die Leitungen 9,10 und einen zentralen Verteilkegel 11,12 kontinuierlich Kühlluft zugeführt. Folglich haben die Schächte für das Füllgut eine obere Vorwärmzone 13, eine mittlere Brennzone 14 und eine untere Kühlzone 15.

Die Verbrennungsgase strömen aus der Verbrennungszone 14 in einen den jeweiligen Schacht 2,3 umschliessenden Ringkanal, und eine Verbindung 18 zwischen beiden Ringkanälen 16,17 ermöglicht ein Ueberströmen zu dem Ringkanal 17,16 des benachbarten Schachtes 3,2. Die Pfeile 19-22 deuten die Strömungsrichtung an, während der linke Schacht 2 beheizt wird und während im rechten Schacht 3 das Füllgut durch die dort aufwärtsströmenden Verbrennungsgase vorgewärmt wird.

Auch die Beschickung der Ofenschächte 2,3 erfolgt vorzugsweise abwechselnd während der Umschaltung der Beheizung, indem die entsprechende Klappe 24 oder 25 der Beschickungsvorrichtung 1 geöffnet wird.

Für eine vorteilhafte Verteilung zwischen groberem und feinerem Füllgut ist bei dem in Fig.2 dargestellten Ausführungsbeispiel eines erfindungsgemässen Ofen unterhalb der Beschickungsvorrichtung 1 innerhalb des Schachtes 2,3 ein geteilter Verteilkegel 27 vorgesehen, der einen wesentlichen Teil des Schachtquerschnittes ausfüllt. Der obere bzw. radial mittlere Teil 28 des Verteilkegels 27 ist zur Seite hin wegschwenkbar. In weggeschwenkter Position des verstellbaren Kegelteils 28 gelangt das stets zentral eingeschüttete Füllgut durch die zentrale Oeffnung 29 des unteren Kegelteils 30 in den zentralen Bereich des Schachtes 2,3, während bei zentraler Position des oberen Kegelteils 28 über der zentralen Oeffnung 29 das Füllgut über beide Kegelteile 28,30 radial nach aussen gleitet und somit über den Spaltraum 31 zwischen dem Verteilkegel 27 und der Schachtwand in den peripheren Schachtraumbereich gelangt. Eine Durchmischung erfolgt anschliessend in verbesserter Form beim langsamen Absinken des Füllgutes durch die Brennzone des Schachtes 2,3.

Der Durchmesser der Schächte 2,3 beträgt in der Brennzone beispielsweise 3,5 m.

Wie sich aus einem Vergleich der Darstellungen der Fig.1 und 2 ergibt, hat der erfindungsgemässe Ofen im Unterschied zum vorbekannten Oefen Schächte 2,3, deren innere Wandfläche 32 im Bereich der Kühlzone 15 vertikal und folglich kreiszylindrisch bis zur Kante 33 der bodenseitigen, durch den Austragstisch 34 verschlossenen Oeffnung 35 verläuft. Am Beginn der Kühlzone 15 ist diese zylindrische oder um weniger als 4° nach innen geneigte Wandfläche 32 gegenüber der Innenfläche 37 des Schachtes 2,3 im Bereich der Brennzone 14 zu einem grösseren Durchmesser hin nach aussen versetzt, so dass ein innerer Absatz 38 vorhanden ist. Dieser wird von den Verbrennnungsgasen auf ihrem Weg in den Ringkanal 16 in Richtung der Pfeile 19,20 haarnadelförmig bei sehr hohen Temperaturen umströmt.

Im genannten Bereich des Strömungsweges der Verbrennungsgase bzw. im Bereich der Einströmung in den Ringkanal 16 würde sich ein Zuwachsen des Schachtquerschnittes, vor allem verursacht durch feinerkörniges Füllmaterial, besonders nachteilig auswirken, da in diesem Bereich ohnehin eine Verengung des Strömungsweges der Verbrennungsgase vorhanden ist. Das Zuwachsen der erforderlichen Strömungsquerschnitte bei Schachtöfen bekannter Konstruktiom kann zu einem Abfall des Ofenwirkungsgrades bis auf Null bzw. zum Ausfall des Schachtofens führen. Bei einem erfindungsgemässen Schachtofen wird aufgrund der neuartigen Gestaltung des Innenraumes der Schächte im Bereich der Kühlzone 15 ein Zuwachsen des Strömungsquerschnittes und eine Leistungsminderung selbst bei Verwendung von Füllgut mit einer Korngrösse im Bereich von 10 bis 30 mm, sicher vermieden. Auf diese Weise wird die vorteilhafte Gesamtkonstruktion des Schachtofens auch für die Verarbeitung von Gesteinsmaterial zugänglich gemacht, das bisher entweder auf Halden abgeführt oder sehr aufwendig in Drehöfen gebrannt wurde.

## Patentansprüche

1. Schachtofen zum Brennen von mineralischem Füllgut, insbesondere von feinstückigem Kalkstein, im Gleichstrom-Regenerativ-Verfahren, mit mindestens zwei kreiszylindrischen Schächten (2,3), die je eine Vorwärmzone (13), eine Brennzone (14) und eine Kühlzone (15) aufweisen und die im Uebergangsbereich von der Brennzone (14) zur Kühlzone (15) durch einen Verbindungskanal (18) für in periodisch wechselnder Richtung strömende Verbrennungsgase miteinander verbunden sind, wobei die Schächte (2,3) von einem gemeinsamen, mit den Schachträumen verbundenen Kanal (16,17) umschlossen sind, so dass dieser am Uebergang zu dem benachbarten Schacht (2,3) den Verbindungskanal (18) bildet, dadurch gekennzeichnet, dass sich die Schachtinnenwände (32), einschliesslich der Trennwand zwischen den Schächten (2,3) im Bereich der Kühlzone (15), anschliessend an den umschliessenden Kanal (16,17) nach unten zu einer durch eine Austragsvorrichtung (34) verschlossenen bodenseitigen Schachtöffnung (35) hin senkrecht oder mit einer Neigung von weniger als 4° erstrecken und dass eine Beschickungsvorrichtung (1) mit einer Verteileinrichtung (27-31) zur separaten Beschickung von feinerem und groberem Füllgut zu radial verschiedenen Schachtbereichen vorgesehen ist.

2. Schachtofen nach Anspruch 1, dadurch gekennzeichnet, dass jeder Schacht (2,3) im Austragsbereich durch einen zentral angeordneten Körper (11,12) verengt ist.

## Revendications

1. Four à cuve pour la cuisson de matières minérales en vrac, notamment de pierres à chaux à fragments de petite taille, suivant le procédé de régénération à flux parallèles, avec au moins deux cuves (2, 3) de forme cylindrique à base circulaire qui présentent chacune une zone de réchauffage (13), une zone de combustion (14) et une zone de refroidissement (15) et qui dans la zone de transition entre la zone de combustion (14) et la zone de refroidissement (15) sont reliées l'une à l'autre par un canal de communication (18) pour la circulation en sens périodiquement alternés des gaz de combustion, les cuves (2, 3) étant entourées d'un canal commun (16, 17) raccordé aux chambres de cuve, de telle sorte que ledit canal (16, 17) constitue, au niveau de la transition vers la cuve (2, 3) voisine, ledit canal de communication (18),
caractérisé en ce que dans la zone de refroidissement (15), les parois intérieures (32) des cuves, y compris la paroi de séparation entre les cuves, raccordées au canal (16, 17) qui les ceinture, sont orientées vers le dessous en direction verticale ou avec une inclinaison de moins de 4° vers une ouverture de cuve inférieure (35) obturée par un dispositif d'évacuation (34) et en ce qu'il est prévu un dispositif de distribution (27 - 31) pour l'admission séparée de matières en vrac plus ou moins fines vers des zones de cuve radialement différentes.

2. Four à cuve suivant la revendication 1, caractérisé en ce que chaque cuve (2, 3) est, dans la zone d'évacuation, étranglée suite à la présence d'un organe disposé centralement.

## Claims

1. A shaft kiln for burning a mineral charge, particularly small-sized limestone, in a parallel-flow-regenerative process, with at least two circular cylindrical shafts (2, 3), each of which has a preheating zone (13), a burning zone (14) and a cooling zone (15) and which are interconnected in the transition area between the burning zone (14) and the cooling zone (15) by a connecting passage (18) for combustion gases flowing in periodically alternating direction, the shafts (2, 3) being surrounded by a common passage (16, 17) connected to the shaft areas, so that at the transition to the adjacent shaft (2, 3) said passage forms the connecting passage (18), characterized in that the shaft inner walls (32), including the partitions between the shafts (2, 3) in the vicinity of the cooling zone (15), following onto the surrounding passage (16, 17) extends downwards to a bottom-side shaft opening (35) closed by a discharge device (34) either perpendicularly or with an inclination of less than 4° and that a charging device (1) having a distributing device (27-31) is provided for the separate charging of finer and coarser charge material to radially different shaft areas.

2. Shaft kiln according to claim 1, characterized in that in the discharge region each shaft (2, 3) is constricted by a centrally positioned body (11, 12).
